# EUROPEAN PATENT SPECIFICATION

(11) **EP 3 429 123 B1**
(45) Date of publication and mention of the grant of the patent: **24.07.2019**
(21) Application number: 17800990.8
(22) Date of filing: 16.05.2017
(51) Int. Cl.: H04L 12/12, G06Q 30/02, H04N 21/442

(54) **ADVERTISEMENT PLAYBACK SYSTEM AND ADVERTISEMENT PLAYBACK METHOD**
WERBUNGSWIEDERGABESYSTEM UND WERBUNGSWIEDERGABEVERFAHREN
SYSTÈME ET PROCÉDÉ DE LECTURE DE PUBLICITÉ

(43) Date of publication of application: 16.01.2019
(73) Proprietor: Shenzhen Goodix Technology Co., Ltd., Guangdong 518045 (CN)
(72) Inventor: WANG, Wen-Chi, Taipei 100 (TW); HUANG, Yen-Yin, Taipei 100 (TW)
(74) Representative: Straus, Alexander
(86) International application number: PCT/CN2017/084557
(87) International publication number: WO 2018/209566

(56) References cited:
- EP-A2- 2 348 475
- WO-A1-2014/037764
- WO-A1-2016/061626
- CN-A- 103 514 242
- CN-A- 104 252 229
- CN-A- 105 721 603
- CN-U- 203 840 339
- US-A1- 2008 143 487
- US-A1- 2011 170 004
- US-A1- 2012 265 616
- US-A1- 2013 057 553

## Description

### Field of the Invention

The present application relates to an advertising system and an advertising method, and more particularly, to an advertising system and an advertising method capable of broadcasting audio of advertisement to particular audience.

### Background

Advertising promotes commercial product effectively, which also stimulates the purchase desire of consumers. Recently, as display technology evolves, advertisement may be broadcasted by a signage device, such as a signage, a large billboard or a television wall, disposed in public area such as a department store, a wholesale store, a front of a store, a railway station, etc. The signage device stated in the above plays the advertisement silently (or in a low volume). Potential consumers passing through only see the video part of the advertisement, but are not able to hear the audio part of the advertisement. Nevertheless, the advertising method stated in the above only involves advertisement pushing in sense of sight, which lacks of advertisement pushing in sense of auditory and reduces consumer's sensory experience. If the advertisement is played by a larger volume, it causes disturbance to pedestrians who are not interested in and is too noisy.

Therefore, it is necessary to improve the prior art.

D1 (CN 203 840 339 U) discloses a communication apparatus for acquiring connection information through an audio signal, and a paired device and a user device thereof. The paired device would actively broadcast the audio signal containing the connection information. However, D1 does not involve identification of interested users/pedestrians.

D2 (WO 2016/061626 A1) discloses a display device. The display device is capable of detecting the presence of one or more user, and displays the advertisement content. However, to prevent disturbance to pedestrians/users who are not interested in the advertisement, especially a crowded area, D2 provides no specific solution to identify the interested users/pedestrians, since people near the display device of D2 would be detected as presence but not all of them are interested in the content of the advertisement.

D3 (US 2012/265616 A1) discloses a system which monitors behavior of an individual and selects an appropriate advertisement for/to the individual. Note that, the scenario of D3 is different from the present application, since in the context of the present application, the signage device displays one video, regardless of the pedestrians' interest.

D4 (US 2008/0143487 A1) discloses a system and method for enabling interrupts for RFID tags. An RFID tag is provided with an output signal that can notify another chip in a system, or another function within the same IC, that a read of the RFID's information has taken place. However, D4 does not involve identification of interested users/pedestrians.

### Summary

It is therefore a primary objective of the present application to provide an advertising system and an advertising method capable of broadcasting audio of advertisement to particular audience, to improve over disadvantages of the prior art.

The present invention is defined in the appended independent claims to which reference should be made. Advantageous features are set out in the appended dependent claims.

These and other objectives of the present application will no doubt become obvious to those of ordinary skill in the art after reading the following detailed description of the preferred embodiment that is illustrated in the various figures and drawings.

### Brief Description of the Drawings

FIG. 1 is a schematic diagram of an appearance of an advertising system according to an embodiment of the present application.
FIG. 2 is a functional block diagram of the advertising system of FIG. 1.
FIG. 3 is a schematic diagram of an advertising method according to an embodiment of the present application.

### Detailed Description

In order to make the objects, technical solutions and advantages of the present application become more apparent, the following relies on the accompanying drawings and embodiments to describe the present application in further detail. It should be understood that the specific embodiments described herein are only for explaining the present application and are not intended to limit the present application.

The present application mainly performs face detection on the image captured around the signage (to determine whether or not there is a human face in the image), and has knowledge about whether or not there is potential consumer stopping by the front of the signage and interested in the advertisement content. If yes, the signage device may connect the user device brought by the consumer and send the audio of the advertisement to the user device brought by the consumer, such that the consumer may hear the audio of the advertisement from the user device. Therefore, the present application may enhance consumer's sensory experience in both of sense of sight and auditory, without disturbing other people.

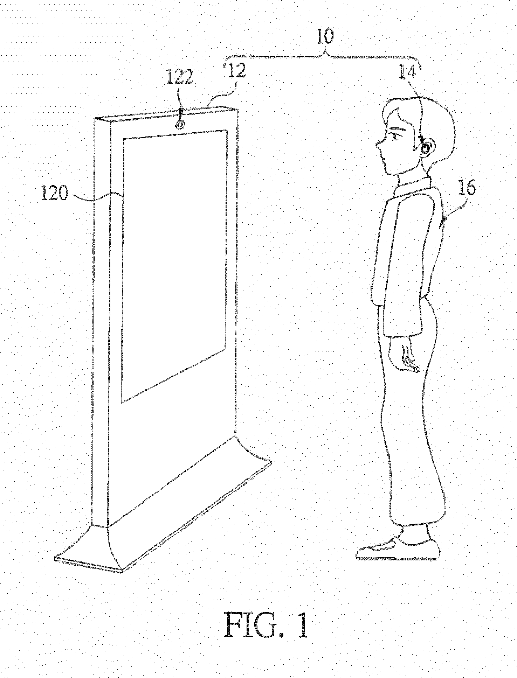

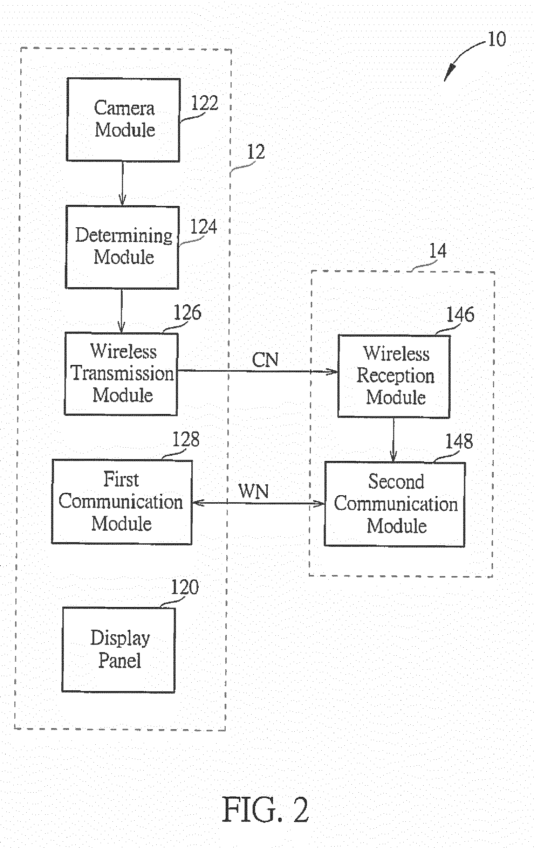

Specifically, please refer to FIG. 1 and FIG. 2 . FIG. 1 and FIG. 2 are an appearance diagram and a functional block diagram of an advertising system 10, respectively, according to an embodiment of the present application, the advertising system 10 comprises a signage device 12 and a user device 14. The signage device 12 may be a digital electronic signage, which may be disposed in public place such as a department store, a wholesale store, a front of a store, a railway station, etc. The user device 14 is a wireless headphone. The signage device 12 comprises a display panel 120, a camera module 122, a determining module 124, a wireless transmission module 126 and a first communication module 128. The user device 14 comprises a wireless reception module 146 and a second communication module 148. The camera module 122 may comprise an optical lens and light sensing device/component such as charge-coupled device (CCD) or CMOS image sensor (CIS).

The wireless transmission module 126 and the wireless reception module 146 are a transmission module and a reception module using the same transmission medium, and the transmission medium is not easily perceived by human, e.g., ultrasound or infrared (IR) . When the wireless transmission module 126 is an ultrasound transmission module, the wireless reception module 146 is an ultrasound reception module; when the wireless transmission module 126 is an infrared transmission module, the wireless reception module 146 is an infrared reception module. In other words, the wireless transmission module 126/the wireless reception module 146 may transmit/receive small data amount and consume less power. In comparison, the first communication module 128 and the second communication module 148 may transmit/receive large data amount and consume more power. In some embodiments, the first communication module 128 and the second communication module 148 are WiFi modules, Bluetooth (BT) modules or near field communication (NFC) modules.

The display panel 120 is configured to play only a video part of an advertisement. That is, through the display panel 120, audience/consumer only has visual on the video part of the advertisement. The camera module 122 may be disposed by an upper edge of the display panel 120, configured to capture an image in relative to the display panel 120, wherein the image in relative to the display panel 120 represents the image captured at the direction of which the display panel 120 displays, i.e., at the direct, perpendicular to the display panel 120, toward which the pixel displaying devices of the display panel 120 emit light. The determining module 124, coupled to the camera module 122, is configured to determine whether or not a human face exists in the image. Face detection techniques, determining whether or not a human face exists in the image, is known by the art, which is not narrated herein. In addition, the determining module 124 may be realized by application specific integrated circuit (ASIC), microcontroller (MCU) or central processing unit (CPU). The wireless transmission module 126 is coupled to the determining module 124. When the determining module 124 determines that there is a human face in the image, the determining module 124 may generate an informing signal to the wireless transmission module 126, to inform the wireless transmission module 126 to broadcast/transmit a connection information CN, where the connection information CN contains required connection information to establish a wireless connection with the first communication module 128, e.g., a service set identifier (SSID) for establishing a WiFi connection with the first communication module 128 or a password for establishing the wireless connection.

When the wireless reception module 146 of the user device 14 receives the connection information CN, the wireless reception module 146 may deliver the connection information CN to the second communication module 148, and the second communication module 148 may establish a wireless connection WN with the first communication module 128 according to the connection information CN. Once the wireless connection WN is established, the signage device 12 may utilize the first communication module 128 to transmit an audio signal to the user device 14 via the wireless connection WN. The audio signal, which may be a streaming audio signal, comprises an audio corresponding to the advertisement. It means that the audio signal comprises the audio corresponding to the video which is displayed by the display panel 120. After the user device 14 receives the audio signal, the user device 14 may decode the audio signal and play the audio of the advertisement via a speaker within the wireless headphone.

In short, when a consumer 16 stops by the signage device 12, the signage device 12 utilizes the camera module 122 to capture the image in relative to the display panel 120, and utilizes the determining module 124 to perform face detection on the image to determine whether or not a human face exists in the image. When the determining module 124 determines that there is a human face in the image , the signage device 12 utilizes the wireless transmission module 126 to transmit the connection information CN (which is required for establishing connection with the first communication module 128) to the user device 14 (which can be the headphone) held by the consumer 16. The user device 14 may establish the connection with the signage device 12 according to the connection information CN, so as to receive the audio of the advertisement. In such a condition, as long as the consumer 16 stands by the signage device 12 and stares at the content displayed on the display panel 120, the user device 14 (wireless headphone) held by the consumer 16 would automatically play the audio corresponding to the advertisement. There is no need for perform any (manually) setting on the user device 14, which brings usage convenience.

In comparison, D1 teaches actively broadcasting the connection information to all users without identification of interested users/pedestrians at all. Different from the advertising system 10, D1 lacks of a mechanism of determining when to transmit the connection information. In addition, even though D2 is capable of detecting the presence of one or more user, D2 provides no specific solution to identify the interested users/pedestrians. In a crowded area, there may be many people crowded near the signage device but none of them pay attention to what the signage device displays, which means that detecting the presence of user (s) is insufficient. Different from D1 and D2, the advertising system 10 is able to successfully identify the interested pedestrian (s) and effectively deliver the audio part of the advertisement to the user device(s) carried by those interested pedestrian(s).

In addition, when the determining module 124 determines that there is a human face in the image, the wireless transmission module 126 may continuously transmit the connection information CN for a specific time (e.g., 3 to 5 seconds). In an embodiment, after the wireless transmission module 126 repeatedly transmits the connection information CN for the specific time, the wireless transmission module 126 may cease transmitting the connection information CN. In contrast, when the determining module 124 determines that there is no human face in the image, the wireless transmission module 126 may not transmit the connection information CN.

In another perspective, the wireless reception module 146 of the user device 14 is shut off or disabled most of the time but is active or enabled periodically. For example, the wireless reception module 146 may take one second as one period, and be active or enabled for one (or multiple) millisecond (s) in every one second period, so as to detect whether the wireless transmission module 126 transmits the connection information CN. In addition, to save electric power, the second communication module 148 of the user device 14 may be in a sleep mode most of the time. Once the wireless reception module 146 receives the connection information CN, the wireless reception module 146 may generate a wake-up signal to the second communication module 148, such that the second communication module 148 is switched from the sleep mode to the normal operation mode and establishes the wireless connection WN with the first communication module 128. After the second communication module 148 establishes the wireless connection WN with the first communication module 128, the wireless transmission module 126 of the signage device 12 may cease transmitting the connection information CN.

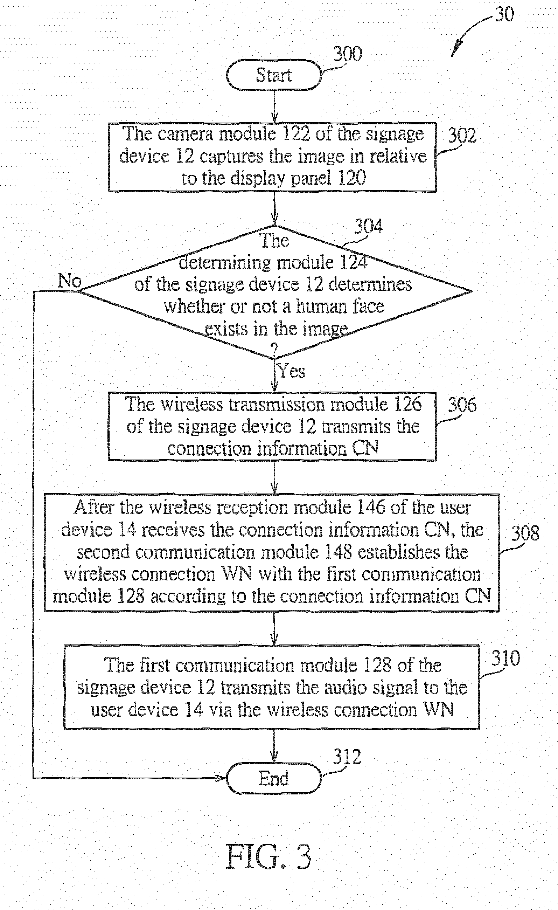

Operation of the advertising system 10 may be summarized into a process. Please refer to FIG. 3, which is a schematic diagram of an advertising method 30 according to an embodiment of the present application. The advertising method 30 may be executed by the advertising system 10. As shown in FIG. 3, the advertising method 30 comprises following steps:

| | |
|---|---|
| Step 300: | Start. |
| Step 302: | The camera module 122 of the signage device 12 captures the image in relative to the display panel 120. |
| Step 304: | The determining module 124 of the signage device 12 determines whether or not a human face exists in the image? If yes, go to Step 306; otherwise, go to Step 312. |
| Step 306: | The wireless transmission module 126 of the signage device 12 transmits the connection information CN. |
| Step 308: | After the wireless reception module 146 of the user device 14 receives the connection information CN, the second communication module 148 establishes the wireless connection WN with the first communication module 128 according to the connection information CN. |
| Step 310: | The first communication module 128 of the signage device 12 transmits the audio signal to the user device 14 via the wireless connection WN. |
| Step 312: | End. |

Details of the advertising method 30 may be referred to the paragraphs in the above, which is not narrated herein.

Notably, the embodiments stated in the above are utilized for illustrating the concept of the present application. Those skilled in the art may make modifications and alterations accordingly, and not limited herein. For example, the signage device is not limited to be the digital electronic signage. The signage device may be a digital electronic billboard or a television wall, which is also within the scope of the present application. In addition, the user device is not limited to be the headphone. The user device may be an electronic device held by a single user, e.g., a mobile phone, a tablet, which is also within the scope of the present application. In addition, the camera module is not limited to be disposed by the upper edge of the display panel. The camera module may be disposed by a left edge, a right edge or a bottom edge. Furthermore, for a large signage device, the camera module may be disposed between the pixel displaying devices of the display panel, i.e., the camera module may be disposed within the display panel, which is also within the scope of the present application.

In summary, the present application utilizes face detection to determine whether or not a consumer stops by the front of the signage device. When the consumer stares the signage device, the signage device connects the user device held by the consumer, and transmits the audio of the advertisement to the user device held by the consumer. Therefore, the present application may enhance consumer's sensory experience, without disturbing other pedestrians/people. Moreover, the present application utilizes the camera module and the determining module of the signage device to perform face detection determining whether or not a human face exists.

The foregoing is only preferred embodiments of the present application, it is not intended to limit the present application, any modifications within the principles of the present invention, equivalent replacement and improvement, etc., should be included within the scope of the application.

## Claims

1. An advertising system comprising:
a signage device (12), comprising:
a display panel (120), configured to play the video part of an advertisement;
a camera module (122), disposed around the display panel (120) or within the display panel (120), configured to capture an image;
a determining module (124), coupled to the camera module (122), configured to determine whether or not a human face exists in the image;
a wireless transmission module (126), coupled to the determining module (124), wherein the wireless transmission module (126) transmits a connection information (CN) when the determining module (124) determines that there is a human face in the image; and
a first communication module (128); and
a user device (14), comprising:
a wireless reception module (146); and
a second communication module (148);
wherein the second communication module (148) establishes a wireless connection (WN) with the first communication module (128) according to the connection information (CN) when the wireless reception module (146) receives the connection information (CN), and the signage device (12) transmits an audio signal to the user device (14) via the wireless connection (WN), and the audio signal comprises the audio part of the advertisement.

2. The advertising system as claim 1, **characterized in that**, when the determining module (124) determines that there is a human face in the image, the wireless transmission module (126) continuously transmits the connection information (CN) for a specific time.

3. The advertising system as claim 1, **characterized in that**, when the determining module (124) determines that there is no human face in the image, the wireless transmission module (126) does not transmit the connection information (CN).

4. The advertising system as claim 1, **characterized in that**, the wireless reception module (146) is periodically enabled, so as to detect whether or not the wireless transmission module (126) transmits the connection information (CN).

5. The advertising system as claim 1, **characterized in that**, when the wireless reception module (146) receives the connection information, the wireless reception module (146) generates a wake-up signal to the second communication module (148), such that the second communication module (148) is switched from a sleep mode to a normal operation mode.

6. The advertising system as claim 1, **characterized in that**, the wireless transmission module (126) is an ultrasound transmission module, the wireless reception module (146) is an ultrasound reception module.

7. The advertising system as claim 1, **characterized in that**, the wireless transmission module (126) is an infrared transmission module, the wireless reception module (146) is an infrared reception module.

8. The advertising system as claim 1, **characterized in that**, the wireless transmission module (126) stops transmitting the connection information (CN) after the second communication module establishes the wireless connection (WN) with the first communication module (128).

9. The advertising system as claim 1, **characterized in that**, the first communication module (128) and the second communication module (148) are WiFi modules, Bluetooth modules or near field communication, NFC, modules.

10. An advertising method applied in an advertising system (10), the advertising system (10) comprises a signage device (12) and a user device (14), the signage device (12) plays the video part of an advertisement, the signage device (12) comprises a wireless transmission module (126) and a first communication module (128), the user device (14) comprises a wireless reception module (146) and a second communication module (148), and the advertising method comprises:
the signage device (12) capturing an image and performing a face detection on the image, so as to determine whether or not a human face exists in the image;
the signage device (12) transmitting a connection information (CN) via the wireless transmission module (126) to the wireless reception module (146) when the signage device (12) determines that there is a human face in the image;
the user device (14) establishing a wireless connection (WN) with the signage device (12), between the first communication module (128) and the second communication module (148), according to the connection information (CN) when the user device (14) receives the connection information (CN); and
the signage device (12) transmitting an audio signal to the user device (14) via the wireless connection (WN), wherein the audio signal comprises the audio part of the advertisement.

11. The advertising method as claim 10, **characterized by**, further comprising:
the signage device (12) continuously transmitting the connection information (CN) for a specific time when the signage device determines that there is a human face in the image.

12. The advertising method as claim 10, **characterized by**, further comprising:
the signage device (12) transmitting no connection information (CN) when the signage device determines that there is no human face in the image.

## Patentansprüche

1. Werbesystem, welches umfasst:
ein Schildsystem (12), welches umfasst:
ein Anzeigefeld (120), das ausgestaltet ist, den Videoteil einer Werbung abzuspielen;
ein Kameramodul (122), das um das Anzeigefeld (120) oder in dem Anzeigefeld (120) angeordnet und ausgestaltet ist, ein Bild aufzunehmen;
ein Bestimmungsmodul (124), das mit dem Kameramodul (122) gekoppelt und ausgestaltet ist, zu bestimmen, ob ein menschliches Gesicht in dem Bild vorhanden ist oder nicht;
ein Drahtlos-Übertragungsmodul (126), das mit dem Bestimmungsmodul (124) gekoppelt ist, worin das Drahtlos-Übertragungsmodul (126) eine Verbindungsinformation (CN) überträgt, wenn das Bestimmungsmodul (124) bestimmt, dass ein menschliches Gesicht in dem Bild vorhanden ist; und
ein erstes Kommunikationsmodul (128); und
ein Nutzergerät (14), welches umfasst:
ein Drahtlos-Empfangsmodul (146); und
ein zweites Kommunikationsmodul (148);
worin das zweite Kommunikationsmodul (148) eine Drahtlos-Verbindung (WN) mit dem ersten Kommunikationsmodul (128) entsprechend der Verbindungsinformation (CN) einrichtet, wenn das Drahtlos-Empfangsmodul (146) die Verbindungsinformation (CN) empfängt, und worin das Schildsystem (12) über die Drahtlos-Verbindung (WN) ein Audiosignal an das Nutzergerät (14) überträgt, und worin das Audiosignal den Audioteil der Werbung umfasst.

2. Werbesystem nach Anspruch 1, **dadurch gekennzeichnet, dass** wenn das Bestimmungsmodul (124) bestimmt, dass ein menschliches Gesicht in dem Bild vorliegt, das Drahtlos-Übertragungsmodul (126) die Verbindungsinformation (CN) für eine bestimmte Zeit durchgehend überträgt.

3. Werbesystem nach Anspruch 1, **dadurch gekennzeichnet, dass** wenn das Bestimmungsmodul (124) bestimmt, dass kein menschliches Gesicht in dem Bild vorhanden ist, das Drahtlos-Übertragungsmodul (126) die Verbindungsinformation (CN) nicht überträgt.

4. Werbesystem nach Anspruch 1, **dadurch gekennzeichnet, dass** das Drahtlos-Empfangsmodul (146) periodisch eingeschaltet wird, um zu erfassen, ob das Drahtlos-Übertragungsmodul (126) die Verbindungsinformation (CN) überträgt oder nicht.

5. Werbesystem nach Anspruch 1, **dadurch gekennzeichnet, dass** wenn das Drahtlos-Empfangsmodul (146) die Verbindungsinformation empfängt, das Drahtlos-Empfangsmodul (146) ein Wecksignal für das zweite Kommunikationsmodul (148) erzeugt, so dass das zweite Kommunikationsmodul (148) von einem Ruhemodus in einen normalen Betriebsmodus geschaltet wird.

6. Werbesystem nach Anspruch 1, **dadurch gekennzeichnet, dass** das Drahtlos-Übertragungsmodul (126) ein Ultraschall-Übertragungsmodul und das Drahtlos-Empfangsmodul (146) ein Ultraschall-Empfangsmodul ist.

7. Werbesystem nach Anspruch 1, **dadurch gekennzeichnet, dass** das Drahtlos-Übertragungsmodul (126) ein Infrarot-Übertragungsmodul und das Drahtlos-Empfangsmodul (146) ein Infrarot-Empfangsmodul ist.

8. Werbesystem nach Anspruch 1, **dadurch gekennzeichnet, dass** das Drahtlos-Übertragungsmodul (126) eine Übertragung der Verbindungsinformation (CN) abbricht, nachdem das zweite Kommunikationsmodul die Drahtlos-Verbindung (WN) mit dem ersten Kommunikationsmodul (128) einrichtet.

9. Werbesystem nach Anspruch 1, **dadurch gekennzeichnet, dass** das erste Kommunikationsmodul (128) und das zweite Kommunikationsmodul (148) WiFi-Module, Bluetooth-Module oder Nahfeldkommunikations-, NFC, Module sind.

10. Werbeverfahren, welches in einem Werbesystem (10) angewendet wird, worin das Werbesystem (10) ein Schildsystem (12) und ein Nutzergerät (14) umfasst, worin das Schildsystem (12) den Videoteil einer Werbung abspielt, worin das Schildsystem (12) ein Drahtlos-Übertragungsmodul (126) und ein erstes Kommunikationsmodul (128) umfasst, worin das Nutzergerät (14) ein Drahtlos-Empfangsmodul (146) und ein zweites Kommunikationsmodul (148) umfasst, und worin das Werbeverfahren umfasst:
Aufnehmen eines Bildes und Durchführen einer Gesichtserkennung auf dem Bild durch das Schildsystem (12), um zu bestimmen, ob ein menschliches Gesicht in dem Bild vorhanden ist oder nicht;
Übertragen einer Verbindungsinformation (CN) über das Drahtlos-Übertragungsmodul (126) an das Drahtlos-Empfangsmodul (146) durch das Schildsystem (12), wenn das Schildsystem (12) bestimmt, dass ein menschliches Gesicht in dem Bild vorhanden ist;
Einrichten einer Drahtlos-Verbindung (WN) mit dem Schildsystem (12) durch das Nutzergerät (14), zwischen dem ersten Kommunikationsmodul (128) und dem zweiten Kommunikationsmodul (148), entsprechend der Verbindungsinformation (CN), wenn das Nutzergerät (14) die Verbindungsinformation (CN) empfängt; und
Übertragen eines Audiosignals an das Nutzergerät (14) über die Drahtlos-Verbindung (WN) durch das Schildsystem (12), wobei das Audiosignal den Audioteil der Werbung umfasst.

11. Werbeverfahren nach Anspruch 10, **dadurch gekennzeichnet, dass** es weiter umfasst:
kontinuierliches Übertragen der Verbindungsinformation (CN) für eine bestimmte Zeit durch das Schildsystem (12), wenn das Schildsystem bestimmt, dass ein menschliches Gesicht in dem Bild vorhanden ist.

12. Werbeverfahren nach Anspruch 10, **dadurch gekennzeichnet, dass** es weiter umfasst:
Kein Übertragen einer Verbindungsinformation (CN) durch das Schildsystem (12), wenn das Schildsystem bestimmt, dass kein menschliches Gesicht in dem Bild vorhanden ist.

## Revendications

1. Système publicitaire comprenant :
un dispositif de signalisation (12), comprenant :
un panneau d'affichage (120) conçu pour lire la partie vidéo d'une publicité ;
un module de caméra (122), disposé autour du panneau d'affichage (120) ou à l'intérieur du panneau d'affichage (120), conçu pour capturer une image ;
un module de détermination (124), couplé au module de caméra (122), conçu pour déterminer si un visage humain existe ou non dans l'image ;
un module de transmission sans fil (126), couplé au module de détermination (124), le module de transmission sans fil (126) transmettant des informations de connexion (CN) lorsque le module de détermination (124) détermine qu'il existe un visage humain dans l'image ; et
un premier module de communication (128) ; et
un dispositif utilisateur (14), comprenant :
un module de réception sans fil (146) ; et
un deuxième module de communication (148) ;
le deuxième module de communication (148) établissant une connexion sans fil (WN) avec le premier module de communication (128) en fonction des informations de connexion (CN) lorsque le module de réception sans fil (146) reçoit les informations de connexion (CN) et le dispositif de signalisation (12) transmettant un signal audio au dispositif utilisateur (14) par l'intermédiaire de la connexion sans fil (WN) et le signal audio comprenant la partie audio de la publicité.

2. . Système publicitaire selon la revendication 1, **caractérisé en ce que**, lorsque le module de détermination (124) détermine qu'il existe un visage humain dans l'image, le module de transmission sans fil (126) transmet en continu les informations de connexion (CN) pendant un temps spécifique.

3. Système publicitaire selon la revendication 1, **caractérisé en ce que**, lorsque le module de détermination (124) détermine qu'il n'y a pas de visage humain dans l'image, le module de transmission sans fil (126) ne transmet pas les informations de connexion (CN).

4. Système publicitaire selon la revendication 1, **caractérisé en ce que** le module de réception sans fil (146) est activé périodiquement, de façon à détecter si le module de transmission sans fil (126) transmet ou non les informations de connexion (CN).

5. Système publicitaire selon la revendication 1, **caractérisé en ce que**, lorsque le module de réception sans fil (146) reçoit les informations de connexion, le module de réception sans fil (146) génère un signal de réveil au deuxième module de communication (148), de telle sorte que le deuxième module de communication (148) est commuté d'un mode veille à un mode de fonctionnement normal.

6. Système publicitaire selon la revendication 1, **caractérisé en ce que** le module de transmission sans fil (126) est un module de transmission ultrasonore, le module de réception sans fil (146) est un module de réception ultrasonore.

7. Système publicitaire selon la revendication 1, **caractérisé en ce que** le module de transmission sans fil (126) est un module de transmission infrarouge, le module de réception sans fil (146) est un module de réception infrarouge.

8. Système publicitaire selon la revendication 1, **caractérisé en ce que** le module de transmission sans fil (126) arrête de transmettre les informations de connexion (CN) après l'établissement de la connexion sans fil (WN) avec le premier module de communication (128) par le deuxième module de communication.

9. Système publicitaire selon la revendication 1, **caractérisé en ce que** le premier module de communication (128) et le deuxième module de communication (148) sont des modules WiFi, des modules Bluetooth ou des modules de communication en champ proche, CCP.

10. Procédé de publicité appliqué dans un système de publicité (10), le système de publicité (10) comprenant un dispositif de signalisation (12) et un dispositif utilisateur (14), le dispositif de signalisation (12) lisant la partie vidéo d'une publicité, le dispositif de signalisation (12) comprenant un module de transmission sans fil (126) et un premier module de communication (128), le dispositif utilisateur (14) comprenant un module de réception sans fil (146) et un deuxième module de communication (148) et le procédé de publicité comprenant :
le dispositif de signalisation (12) capturant une image et effectuant une détection de visage sur l'image, de façon à déterminer si un visage humain existe ou non dans l'image ;
le dispositif de signalisation (12) transmettant une information de connexion (CN) par l'intermédiaire du module de transmission sans fil (126) au module de réception sans fil (146) lorsque le dispositif de signalisation (12) détermine qu'il existe un visage humain dans l'image ;
le dispositif utilisateur (14) établissant une connexion sans fil (WN) avec le dispositif de signalisation (12), entre le premier module de communication (128) et le deuxième module de communication (148), en fonction des informations de connexion (CN) lorsque le dispositif utilisateur (14) reçoit les informations de connexion (CN) ; et
le dispositif de signalisation (12) transmettant un signal audio au dispositif utilisateur (14) par l'intermédiaire de la connexion sans fil (WN), le signal audio comprenant la partie audio de la publicité.

11. Procédé publicitaire selon la revendication 10, **caractérisé en ce qu'**il comprend en outre :
le dispositif de signalisation (12) transmettant en continu les informations de connexion (CN) pendant un temps spécifique lorsque le dispositif de signalisation détermine qu'il existe un visage humain dans l'image.

12. Procédé de publicité selon la revendication 10, **caractérisé en ce qu'**il comprend en outre :
le dispositif de signalisation (12) ne transmettant pas d'informations de connexion (CN) lorsque le dispositif de signalisation détermine qu'il n'y a pas de visage humain dans l'image.
